# EUROPEAN PATENT APPLICATION

(11) **EP 4 808 216 A1**
(43) Date of publication of application: **16.09.2026**
(21) Application number: 23958237.2
(22) Date of filing: 07.11.2023
(51) Int. Cl.: H04W 48/16, H04W 74/0833

(54) **TERMINAL, WIRELESS COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); SHIBAIKE, Naoya, Tokyo 100-6150 (JP); KURITA, Daisuke, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2023/040103
(87) International publication number: WO 2025/099832

(57) **Abstract**

A terminal according to one aspect of the present disclosure includes: a receiving section that receives a synchronization signal block common to a plurality of operators, a set of a plurality of identifiers for identifying operators, and information indicating whether or not a cell is a cell in which a plurality of operators share a frequency resource; and a control section that controls operation related to initial access, based on the common synchronization signal, the set of identifiers, and the information. The set of identifiers are received after transmission of a physical random access channel based on the synchronization signal block. According to one aspect of the present disclosure, it is possible to appropriately perform initial access using a shared resource.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For a future radio communication system, it is studied that a plurality of operators share sites/resources and the like for the purpose of increasing the efficiency of use of frequency bands (existing frequency bands and new high frequency bands).

However, how to perform initial access operation when a plurality of operators share resources has not been sufficiently studied. Unless such a study is sufficient, each operator cannot perform operation of flexible communication by each operator, which may cause suppression of improvement in communication quality.

Thus, an object of the present disclosure is to provide a terminal, a radio communication method, and a base station that appropriately determine and use a shared resource.

### Solution to Problem

A terminal according to one aspect of the present disclosure includes: a receiving section that receives a synchronization signal block common to a plurality of operators, a set of a plurality of identifiers for identifying operators, and information indicating whether or not a cell is a cell in which a plurality of operators share a frequency resource; and a control section that controls operation related to initial access, based on the common synchronization signal, the set of identifiers, and the information. The set of identifiers are received after transmission of a physical random access channel based on the synchronization signal block.

### Advantageous Effects of Invention

According to one aspect of the present disclosure, it is possible to appropriately perform initial access using a shared resource.

### Brief Description of Drawings

[FIG. 1] FIG. 1 is a diagram to show an example of an initial access method.
[FIG. 2] FIG. 2A to FIG. 2D are diagrams to show examples of a scenario of sharing.
[FIG. 3] FIG. 3A to FIG. 3C are diagrams to show examples of shared resources.
[FIG. 4] FIG. 4 is a diagram to show an example of an initial access procedure according to a first embodiment.
[FIG. 5] FIG. 5 is a diagram to show an example of an initial access procedure according to a second embodiment.
[FIG. 6] FIG. 6 is a diagram to show an example of an initial access procedure according to option 4a of a fourth embodiment.
[FIG. 7] FIG. 7 is a diagram to show an example of an initial access procedure according to option 4b of the fourth embodiment.
[FIG. 8] FIG. 8 is a diagram to show an example of an initial access procedure according to a fifth embodiment.
[FIG. 9] FIG. 9 is a diagram to show an example of an initial access procedure according to a sixth embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (Initial Access Procedure)

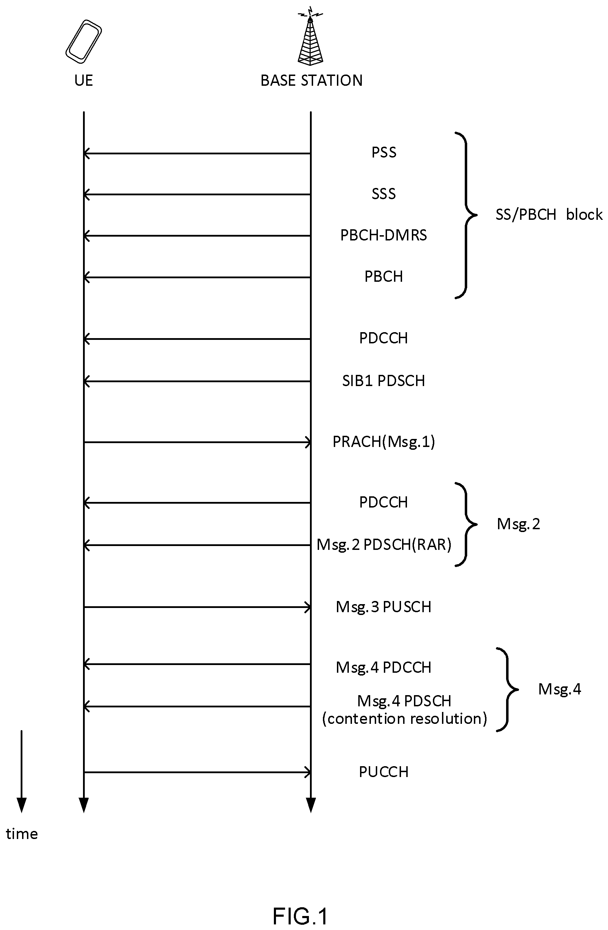

An initial access method/procedure will be described below with reference to FIG. 1 as an example.

After receiving an SSB, a UE performs the initial access procedure. In the initial access procedure, a terminal (which may be referred to as a user terminal or a user apparatus (User Equipment (UE)) (in an RRC_IDLE mode)) receives an SS/PBCH block (SSB), transmits a message (Msg.) 1 (PRACH/random access preamble/preamble), receives Msg.2 (PDCCH, PDSCH including a random access response (RAR)), transmits Msg.3 (PUSCH scheduled by RAR UL grant), and receives Msg.4 (PDCCH, PDSCH including UE contention resolution identity). Thereafter, when the UE transmits an ACK to Msg.4 to a base station (network), an RRC connection is established (RRC_CONNECTED mode).

The reception of the SSB includes PSS detection, SSS detection, PBCH-DMRS detection, and PBCH reception. The PSS detection performs detection of a part of a physical cell ID (PCI), detection (synchronization) of OFDM symbol timing, and (coarse) frequency synchronization. The SSS detection includes detection of a physical cell ID. The PBCH-DMRS detection includes detection of (part of) an SSB index in a half radio frame (5 ms). The PBCH reception includes detection of a system frame number (SFN) and radio frame timing (SSB index), reception of configuration information for remaining minimum system information (RMSI, SIB1) reception, and recognition of whether or not the UE can camp on the cell (carrier).

The SSB has a bandwidth of 20 RBs and a time of 4 symbols. The transmission periodicity of the SSB may be configured from {5, 10, 20, 40, 80, 160} ms. In the half frame, a plurality of symbol positions of the SSB are defined based on a frequency range (FR1, FR2).

The PBCH has payload of 56 bits. N repetitions of the PBCH are transmitted within periodicity of 80 ms. N depends on SSB transmission periodicity.

The system information includes an MIB carried by the PBCH, RMSI (SIB1), and other system information (OSI). SIB1 includes information for performing RACH configuration and a RACH procedure. The relationship of time/frequency resources between the SSB and a PDCCH monitoring resource for SIB1 is configured by the PBCH.

The PDSCH carrying SIB1 (SIB1 PDSCH) is transmitted periodically. The PDSCH is scheduled by a type 0-PDCCH. One SSB corresponds to one SIB1 PDSCH. One SIB1 PDSCH may be repeated twice or need not be repeated. SIB1 configures a public land mobile network (PLMN) ID. The PLMN ID may be referred to as a Mobile Network Operator (MNO) identifier.

The PLMN ID is a global and unique identifier used for identification of an MNO.

The UE identifies an MNO that performs network access operation, based on a specific parameter (for example, a PLMN ID information list (for example, PLMN-IdentityInfoList) in cell access related information (for example, CellAccessRelatedInfo)) in system information (for example, SIB1).

A base station using beam correspondence transmits a plurality of SSBs by using a plurality of respective beams (analog beams), in each SSB transmission periodicity. The plurality of SSBs may be referred to as an SSB burst. The plurality of SSBs have a plurality of respective SSB indices. A UE that detects one SSB transmits a PRACH in a RACH occasion associated with the SSB index and receives a RAR in a RAR window.

### (Sharing among Multiple MNOs)

For 6G, several requirements below are under study.
- Ultra wideband communication.
- Mission critical communication.
- Ultra massive connection.
- Universal coverage.
- Intelligent connection.
- Ubiquitous sensing.
- New use case.

In addition to the above goals, several new concepts can be set as goals.
- Extensible (for example, ensuring more prospects).
- Customizable (for example, facilitating operation).
- Sustainable (for example, reducing cost, increasing robustness).

For reduction of deployment costs of base stations, the following factors of sharing among mobile network operators (MNOs) may be studied for operation in a licensed spectrum.
- Existing sharing from LTE (equipment sharing). Core network sharing (gateway core network, GWCN, multi-operator core network, MOCN). Different operators share a cell to thereby be able to assign different PLMN IDs to different operators.
- RAN sharing (multi-operator RAN, MORAN). Different operators share base station hardware to thereby be able to assign different cells to different operators.
- Site sharing. Different operators share a site to thereby be able to assign different base stations to different operators.
- Spectrum Sharing.

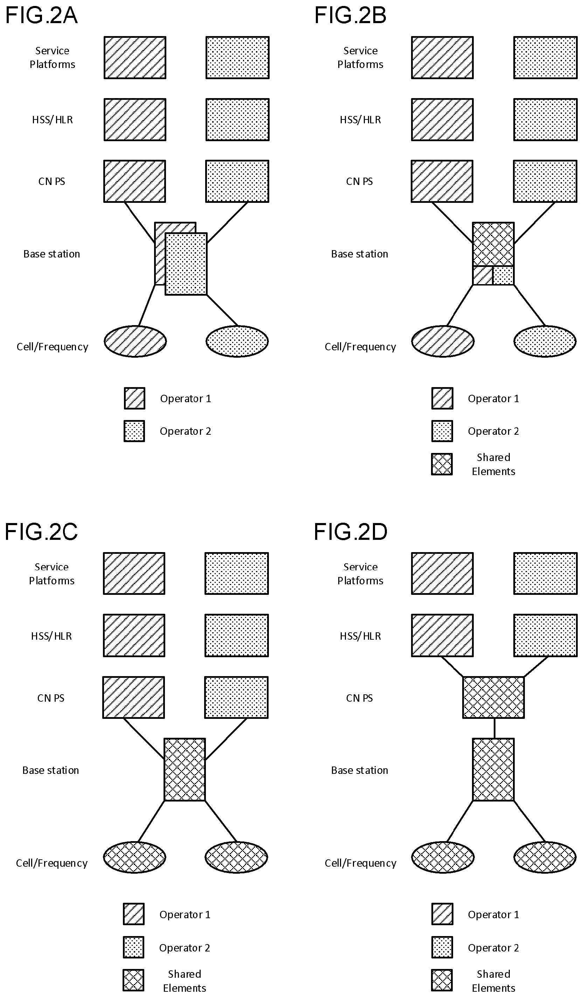

FIG. 2A to FIG. 2D are diagrams to show examples of a scenario of sharing.

FIG. 2A shows an example of site sharing. As shown in FIG. 2A, in the site sharing, an antenna site is shared by a plurality of operators. Meanwhile, service platforms, an HSS (Home Subscriber Server)/HLR (Home Location Register), core network (CN) packet switching (PS), a base station, and a cell/frequency are independent for each of a plurality of service providers.

FIG. 2B shows an example of an MORAN (Multi Operator RAN). As shown in FIG. 2B, in MORAN, a plurality of operators share a part of a base station (for example, the hardware of the base station) in addition to antenna sites. Meanwhile, a service platform, an HSS/HLR, CN PS, the other part of the base station (for example, the software of the base station), and a cell/frequency are independent for each of a plurality of operators.

FIG. 2C shows an example of an MOCN (Multi Operator Core Network). As shown in FIG. 2C, in MOCN, in multiple operators share a base station and a cell/frequency. Meanwhile, a service platform, an HSS/HLR, and CN PS are independent for each of a plurality of operators.

FIG. 2D shows an example of a GWCN (Gateway Core Network). As shown in FIG. 2D, in GWCN, a plurality of operators share CN PS, a base stations, and a cell/frequency. Meanwhile, a service platform and an HSS/HLR are independent for each of the plurality of operators.

For example, in MOCN/GWCN, since a cell is shared by a plurality of operators, it is desirable that a configuration can be changed for each operator (for example, for each ID related to a public land mobile network (PLMN) (PLMN ID)).

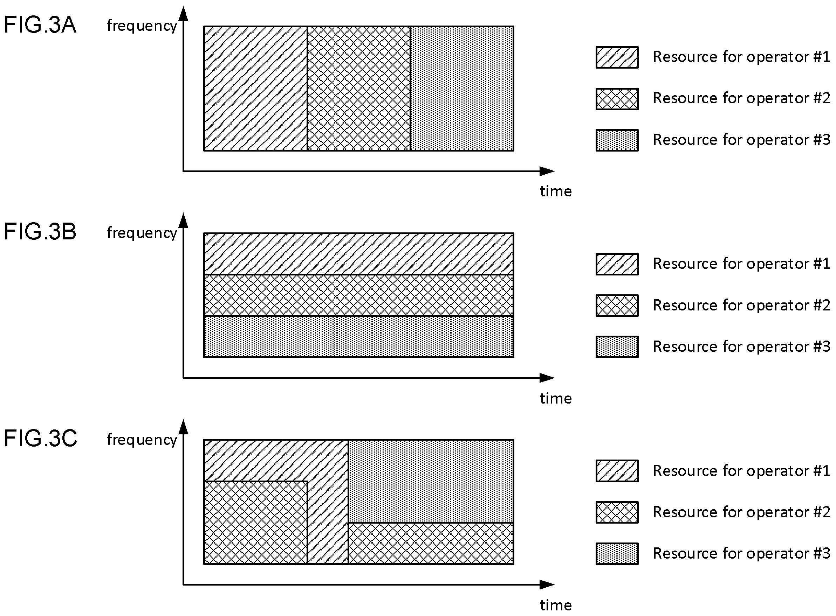

As described above, it is not studied sufficiently how to share a base station apparatus/resource when the base station apparatus/resource is shared among a plurality of operators. For example, as a shared frequency resource, a case where resources for the respective operators are time division multiplexed (TDMed) (see FIG. 3A), a case where resources for the respective operators are frequency division multiplexed (FDMed) (see FIG. 3B), and a case where resources for the respective operator are TDMed and FDMed (which may be referred to as flexible TDM/FDM, see FIG. 3C) are conceivable.

However, when control is performed such that time/frequency resources are orthogonal for each operator in the shared frequency resource, there is a concern that frequency use efficiency and energy saving efficiency on the network side are reduced.

Hence, unless the configuration for the specific UE can be changed between a plurality of operators, it is not possible for each operator to operate flexible communication and thus not possible to determine a resource related to flexible and appropriate initial access, which may suppress improvement of communication quality.

Thus, the inventors of the present invention came up with the idea of a method of using a shared resource in order to efficiently perform station deployment/frequency utilization by resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a_{b}, a_b, and a notation in which b is attached to the lower right of a may be interchangeably interpreted. In the present disclosure, a^{c}, a^c, and a notation in which c is attached to the upper right of a may be interchangeably interpreted. In the present disclosure, a_{b}^{c}, a_b^c, and a notation in which b is attached to the lower right of a and c is attached to the upper right of a may be interchangeably interpreted. In the present disclosure, ceil(x), the ceiling function, and ceiling may be interchangeably interpreted. In the present disclosure, floor(x), the floor function, and floor may be interchangeably interpreted. In the present disclosure, sqrt(x) and a square root (root) may be interchangeably interpreted. In the present disclosure, x^{~} may be expressed by attaching ^{~} over x or may be referred to as x-tilde. In the present disclosure, x⁻ may be expressed by attaching - over x or may be referred to as x-bar.

In the present disclosure, an MNO, an operator, a service provider, a PLMN, an operator policy, a configuration for each service provider, a configuration for each operator, and the like may be interchangeably interpreted. In the present disclosure, an MNO, an NW, a base station, a central unit (CU), a distributed unit (DU), a radio unit (RU), and a TRP may be interchangeably interpreted.

In the present disclosure, a specific ID, a PLMN ID, an ID related to a PLMN, an ID related to an operator, a PLMN, one or more pieces of information identified by a PLMN, a PLMN set, an ID/information/parameter used to identify an operator/MNO/service provider, and the like may be interchangeably interpreted.

In the present disclosure, system information (SI), a part of system information, partial system information, an MIB, an SIB, an SIB used for initial access, SIB1, SIB X (X is any number), a downlink shared channel carrying system information, and a PDSCH carrying system information may be interchangeably interpreted.

### (Radio Communication Method)

A UE may follow, for connection with a cell, an initial access method as shown in FIG. 1 described above or may follow an initial access method different from the method.

A specific signal/message (for example, message x) received in initial access may mean transmission/reception of a signal/message based on a common parameter.

The UE may determine at least one of information (for example, a PLMN ID) on the operator of the cell to connect to and an access category, based on the specific signal. The UE may determine whether or not to be able to connect to the cell, based on at least one of information (for example, a PLMN ID) on the operator of the cell to connect to and an access category.

In the present disclosure, an access category may mean a type of a communication request (permitted) in the UE. Examples of the communication request may include a response to an incoming call, an emergency call, a voice call, a video call, and the like.

Hereinafter, in the present disclosure, a cell in which frequency resource sharing is performed between a plurality of operators is referred to as "cell x" for convenience, but this does not indicate a unique name of the cell.

The UE may receive a specific signal common to operators (UE common signal) and perform communication related to connection in cell x.

Hereinafter, each embodiment of the present disclosure may be applied based on the assumption that the UE attempts to connect to a given operator (cell corresponding thereto)/PLMN. In the present disclosure, the operator/PLMN is referred to as "PLMN #A" for convenience.

In the present disclosure, "common to (a plurality of) operators" may mean that the operators are not distinguished, or may mean that use by the UE is possible regardless of operator.

In the present disclosure, "at (the time of)" and "after" may be interchangeably interpreted.

An initial/random access procedure in each embodiment of the present disclosure may include a specific number of steps.

The initial/random access procedure in each embodiment of the present disclosure may be, for example, a 4-step random access procedure (for example, a random access procedure using message 1 (PRACH), message 2 (RAR), message 3, and message 4), a 2-step random access procedure (for example, a random access procedure using message A and message B), or an N-step random access procedure (N is any number). The initial access procedure in each embodiment of the present disclosure may be partially different from an existing initial/random access procedure (defined in Rel. 18 or previous versions).

A received DL channel/signal may include a reference signal (for example, a DMRS/CSI-RS/TRS/PTRS).

A DL channel/signal in the present disclosure may be interpreted as any DL channel/signal (for example, a PDCCH/PDSCH), and a UL channel/signal in the present disclosure may be interpreted as any UL channel/signal (for example, a PUCCH/PUSCH).

In the present disclosure, a (plurality of) UE common signal(s) may mean a signal common to a plurality of UEs or a signal based on a common resource configuration. In the present disclosure, a (plurality of) UE common signal(s) may be based on whether the UE common signal(s) is common to service providers or may be unrelated to whether the UE common signal(s) is common to service providers.

In the present disclosure, the description of PLMN-common/PLMN-dedicated/UE-common/UE-dedicated may mean PLMN-common/PLMN-dedicated/UE-common/UE-dedicated configurations/resources/signals, respectively.

In the present disclosure, a PLMN-common configuration/resource/signal may mean a configuration/resource/signal not depending on PLMN ID (not associated with any PLMN ID) or may mean a configuration/resource/signal associated with a plurality of PLMN IDs.

In the present disclosure, a PLMN-common configuration/resource/signal may mean a configuration/resource/signal associated with one PLMN ID.

### <0th Embodiment>

A UE may be notified that the cell to connect to is cell x, by using a specific DL signal.

The UE may perform operation related to connection to cell x, based on the notification.

The specific DL signal may be, for example, at least one of a PDCCH/CORESET (for example, a PDCCH/CORESET (PDCCH0/CORESET0) for monitoring system information), system information (for example, SIB1/another SIB), a message 2 PDSCH, a message 4 PDCCH, and a message 4 PDSCH.

The UE may be notified of an access category by using a specific DL signal. The number of a specific access category may be associated with cell x. In this case, the access category may indicate that the cell to which the UE is to connect is cell x.

The UE may be notified that the cell is cell x (not a PLMN/instead of a PLMN) by using a signal used for notification of a PLMN in a cell (non-cell x) other than cell x.

When the UE is connected to non-cell x, the UE may receive information on cell x via non-cell x.

The UE may receive information indicating that the cell to connect to is cell x, together with information on a plurality of PLMNs (for example, a plurality of PLMN IDs, a PLMN set).

The UE may receive information indicating that the cell to connect to is cell x, separately from information on a plurality of PLMNs (for example, a plurality of PLMN IDs, a PLMN set).

The UE may perform operation related to CA/DC using cell x and non-cell x.

When cell x is used as a specific cell (for example, a PCell/special cell (SpCell)/SCell), the UE may assume/expect/determine that at least one UE common signal in cell x is a signal common to service providers.

In the present disclosure, an SpCell may mean a PCell/PSCell.

Hereinafter, first to eighth embodiments relate to PLMN-common and PLMN-specific configuration/signaling in initial access.

Modes/operations corresponding to the first to eighth embodiments may be defined. The UE may determine switching/application/operation of at least two modes/operations corresponding to the first to eighth embodiments, based on a specific configuration/indication.

### <First Embodiment>

A UE may receive an SSB in cell x.

The SSB may be an SSB common to a plurality of service providers.

The UE may receive, in the SSB (for example, a PBCH/MIB), at least one of information on a plurality of service providers that can connect to cell x (a plurality of specific IDs (for example, PLMN IDs), information associated with the plurality of specific IDs, which may be referred to as, for example, a PLMN set) and a configuration related to communication per PLMN.

The UE may assume that a signal at or before the reception of the MIB is PLMN-common/UE-common. The UE may assume that a signal after the reception of the MIB (signal related to initial access) is a PLMN-dedicated/UE-common signal.

When the PLMN set received by the UE includes a PLMN (PLMN #A) corresponding to the UE, the UE may perform transmission and reception of signals after the reception of the MIB, based on the configuration of communication related to PLMN #A.

The received signal after the reception of the MIB may be, for example, at least one of a PDCCH/CORESET (for example, a PDCCH/CORESET (PDCCH0/CORESET0) for monitoring system information), system information (for example, SIB1/another SIB), a message 2 PDSCH (RAR), a message 4 PDCCH, and a message 4 PDSCH.

The transmission signal after the reception of the MIB may be, for example, at least one of a PRACH (message 1/RACH preamble), a message 3 PUSCH (RRC setup request), and an HARQ-ACK for a message 4 PDSCH.

When the PLMN set received by the UE does not include the PLMN (PLMN #A) corresponding to the UE, the UE may determine that connection to cell x is not possible. In this case, the UE need not transmit and receive signals after the reception of the MIB in cell x.

When the UE determines that connection to cell x is not possible, the UE may perform an initial access procedure for connecting to another cell (for example, non-cell x).

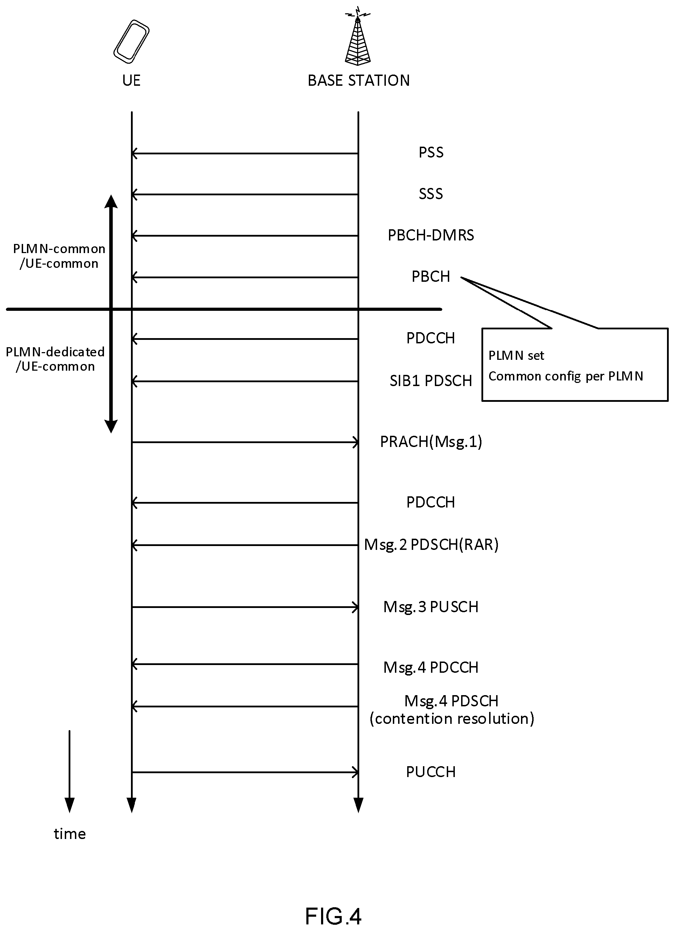

FIG. 4 is a diagram to show an example of an initial access procedure according to the first embodiment. In the example shown in FIG. 4, a UE receives a PLMN set and a common configuration per PLMN in a PBCH. In the example shown in FIG. 4, the UE transmits and receives a signal at or before reception of a PLMN-common/UE-common PBCH (MIB) and transmits and receives a signal (signal related to initial access) after the reception of the MIB that is a PLMN-dedicated/UE-common signal.

According to the first embodiment above, with an SSB being common to service providers, it is possible to flexibly determine a signal after reception of the SSB, for each service provider.

### <Second Embodiment>

A UE may receive an SS/PBCH/MIB in cell x.

The SS/PBCH/MIB may be an SSB common to a plurality of service providers.

The UE may receive, in first system information (for example, SIB1) determined/scheduled by the SS/PBCH/MIB, at least one of information (PLMN set) on a plurality of service providers possible to connect to cell x and a configuration related to communication per PLMN.

The UE may assume that a signal at or before the reception of the first system information is PLMN-common/UE-common. The UE may assume that the signal (signal related to initial access) after the reception of the first system information is a PLMN-dedicated/UE-common signal.

When the PLMN set received by the UE includes a PLMN (PLMN #A) corresponding to the UE, the UE may perform transmission and reception of signals after the reception of the first system information, based on the configuration of communication related to PLMN #A.

A received signal after the reception of the first system information may be, for example, at least one of a message 2 PDSCH (RAR), a message 4 PDCCH, and a message 4 PDSCH.

A transmission signal after the reception of the first system information may be, for example, at least one of a PRACH (message 1/RACH preamble), a message 3 PUSCH (RRC setup request), and an HARQ-ACK for a message 4 PDSCH.

When the PLMN set received by the UE does not include the PLMN (PLMN #A) corresponding to the UE, the UE may determine that connection to cell x is not possible. In this case, the UE need not transmit and receive signals after the reception of the first system information in cell x.

When the UE determines that connection to cell x is not possible, the UE may perform an initial access procedure for connecting to another cell (for example, non-cell x).

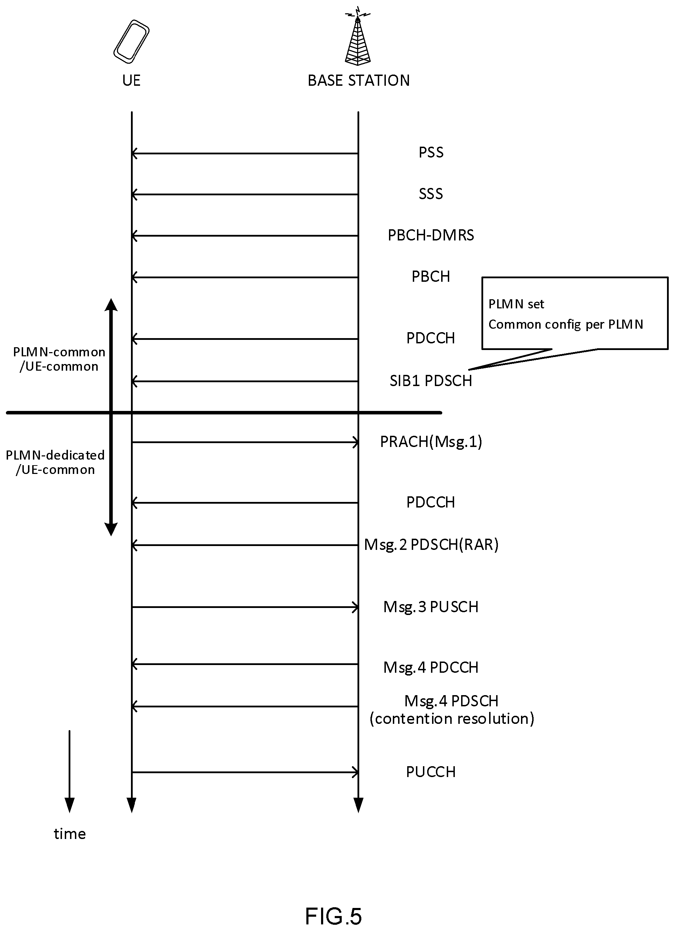

FIG. 5 is a diagram to show an example of an initial access procedure according to the second embodiment. In the example shown in FIG. 5, a UE receives a PLMN set and a common configuration per PLMN in an SIB1 PDSCH. In the example shown in FIG. 5, the UE transmits and receives a signal at or before reception of a PLMN-common/UE-common SIB1 PDSCH and transmits and receives a signal (signal related to initial access) after the reception of the SIB1 PDSCH that is a PLMN-dedicated/UE-common signal.

According to the second embodiment above, with system information determined/scheduled by an SS/PBCH/MIB being common to service providers, it is possible to flexibly determine a signal after reception of the system information for each service provider.

### <Third Embodiment>

A UE may receive an SS/PBCH/MIB/first system information in cell x.

The SS/PBCH/MIB/first system information may be an SSB common to a plurality of service providers.

The UE may receive, in another system information (for example SIBx) received after reception of the first system information (for example, SIB1), at least one of information (PLMN set) on a plurality of service providers possible to connect to cell x and a configuration related to communication per PLMN.

The UE may assume that a signal at or before the reception of the other system information is PLMN -common/UE-common. The UE may assume that the signal (signal related to initial access) after the reception of the other system information is a PLMN-dedicated/UE-common signal.

The UE may be notified that a PLMN set is included in the other system information, in the first system information.

When a PLMN set is not included in the first system information, the UE may assume/determine that a PLMN set is included in the other system information.

When the PLMN set received by the UE includes a PLMN (PLMN #A) corresponding to the UE, the UE may perform transmission and reception of signals after the reception of the other system information, based on the configuration of communication related to PLMN #A.

The UE may perform/initiate operation related to random access, at or after completion of reception of the other system information. The UE may determine not to perform the operation related to random access (PRACH transmission) at or before completion of reception of the other system information.

A received signal after the reception of the other system information may be, for example, at least one of a message 2 PDSCH (RAR), a message 4 PDCCH, and a message 4 PDSCH.

A transmission signal after the reception of the other system information may be, for example, at least one of a PRACH (message 1/RACH preamble), a message 3 PUSCH (RRC setup request), and an HARQ-ACK for a message 4 PDSCH.

When the PLMN set received by the UE does not include the PLMN (PLMN #A) corresponding to the UE, the UE may determine that connection to cell x is not possible. In this case, the UE need not transmit and receive signals after the reception of the other system information in cell x.

When the UE determines that connection to cell x is not possible, the UE may perform an initial access procedure for connecting to another cell (for example, non-cell x).

According to the third embodiment above, with another system information after reception of first system information being common to service providers, it is possible to flexibly determine a signal after reception of the other information for each service provider.

### <Fourth Embodiment>

A UE may receive an SS/PBCH/MIB/system information (for example, first system information/another system information) in cell x.

The SS/PBCH/MIB/system information (for example, the first system information/other system information) may be an SSB common to a plurality of service providers.

The UE may transmit a PRACH by using a resource common to a plurality of service providers.

The UE may receive, in a RAR for a PRACH, at least one of information (PLMN set) on a plurality of service providers possible to connect to cell x and a configuration related to communication per PLMN.

The UE may assume that a signal at or before the reception of the RAR is PLMN-common/UE-common. The UE may assume that at least a signal after the reception of the RAR (signal related to initial access) is a PLMN-dedicated/UE-common signal.

The UE may be notified that a PLMN set is included in a RAR, in the system information (for example, the first system information/other system information).

At least one of when a PLMN set is not included in the system information (for example, the first system information/other system information) and when the resource of the PRACH is common to a plurality of service providers, the UE may assume/determine that a PLMN set is included in the other system information.

When the PLMN set received by the UE includes the PLMN (PLMN #A) corresponding to the UE, the UE may be notified of a RAR UL grant for each PLMN in a RAR. The RAR may be a signal common to a plurality of service providers. The UE may perform transmission and reception of signals after the reception of the RAR, based on a RAR UL grant for PLMN #A and the configuration of communication for PLMN #A (option 4a).

In option 4a, an NW may determine a PLMN of the UE, based on the resource of a message 3 PUSCH (actually used).

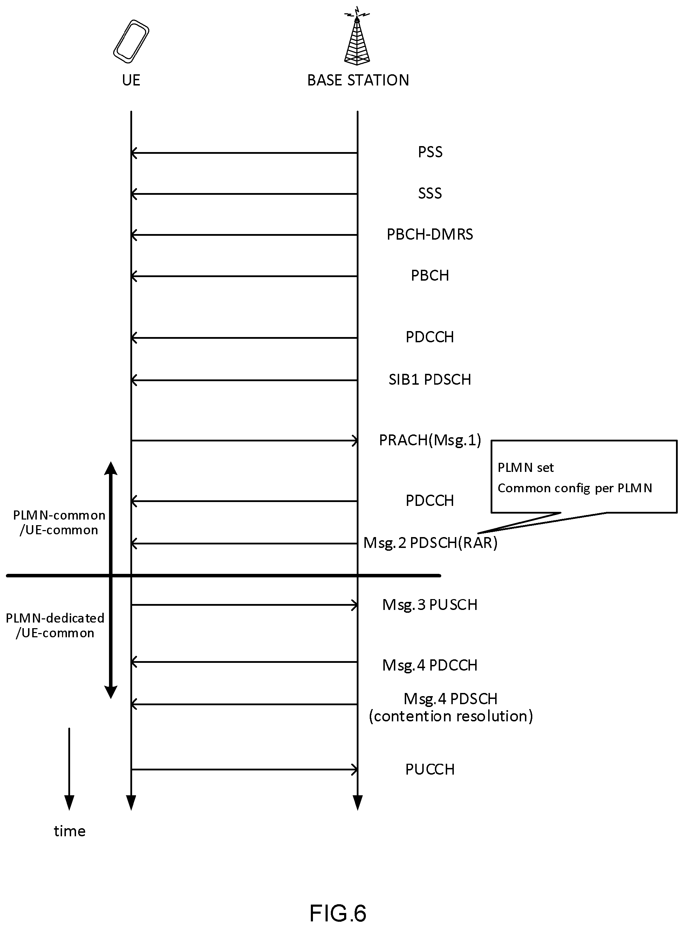

FIG. 6 is a diagram to show an example of an initial access procedure according to option 4a of the fourth embodiment. In the example shown in FIG. 6, the UE transmits and receives a signal at or before reception of a PLMN-common/UE-common RAR and transmits and receives a signal (signal related to initial access) after the reception of the RAR that is a PLMN-dedicated/UE-common signal. In the example shown in FIG. 6, a UE receives a PLMN set and a common configuration per PLMN in a RAR.

When the PLMN set received by the UE includes the PLMN (PLMN #A) corresponding to the UE, the UE may be notified of a RAR UL grant (single RAR UL grant) common to a plurality of service providers in a RAR. The UE may report to cell x that the UE is to connect to PLMN #A via a message 3 PUSCH in a notified resource (PUSCH transmitted by using a PUSCH resource common to a plurality of service providers). The UE may perform transmission and reception of signals after the reception of the RAR (option 4b).

Note that, in the present disclosure, performing connection to PLMN #A, being under the control of PLMN #A, and performing communication, based on a configuration related to PLMN #A may be interchangeably interpreted.

In option 4b, the NW may determine a PLMN of the UE, based on an explicit report on a PLMN.

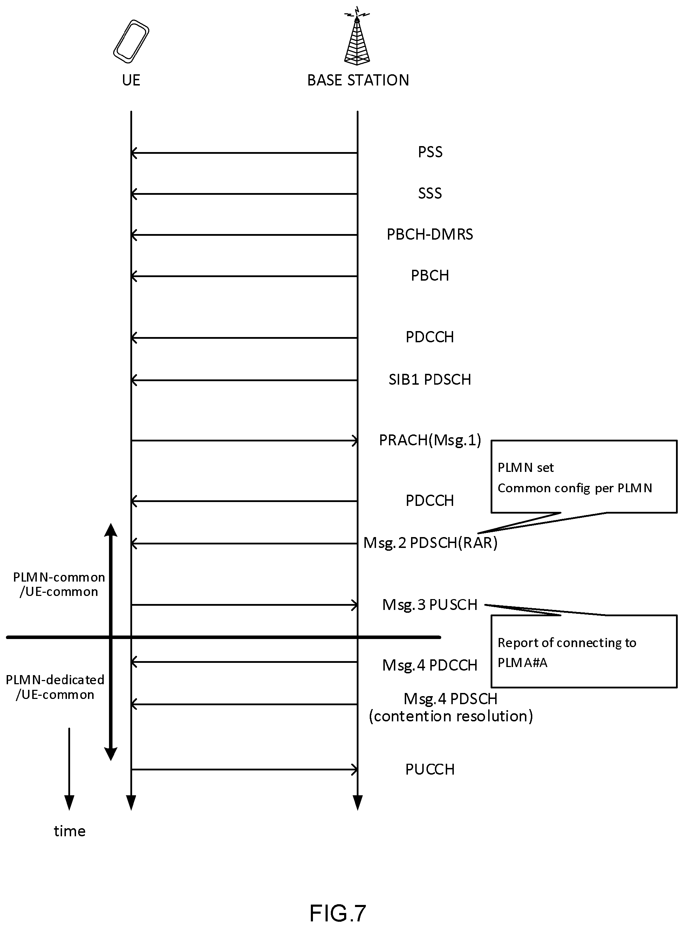

FIG. 7 is a diagram to show an example of an initial access procedure according to option 4b of the fourth embodiment. In the example shown in FIG. 7, the UE transmits and receives a signal at or before transmission of a PLMN-common/UE-common message 3 PUSCH and transmits and receives a signal (signal related to initial access) after the transmission of the message 3 PUSCH that is a PLMN-dedicated/UE-common signal. In the example shown in FIG. 7, the UE receives a PLMN set and a common configuration per PLMN in a RAR, and reports that the UE is to connect to PLMN #A, by using the message 3 PUSCH.

A received signal after the reception of the RAR may be, for example, at least one of a message 4 PDCCH and a message 4 PDSCH.

The transmission signal after the reception of the RAR may be, for example, at least one of a message 3 PUSCH (RRC setup request) and an HARQ-ACK of a message 4 PDSCH.

When the PLMN set received by the UE does not include the PLMN (PLMN #A) corresponding to the UE, the UE may determine that connection to cell x is not possible. In this case, the UE need not transmit and receive signals after the reception of the RAR in cell x.

When the UE determines that connection to cell x is not possible, the UE may perform an initial access procedure for connecting to another cell (for example, non-cell x).

According to the fourth embodiment above, with the resource of a PRACH being common to service providers, it is possible to flexibly determine at least one of a RAR and a signal after reception of the RAR, for each service provider.

### <Fifth Embodiment>

A UE may receive an SS/PBCH/MIB/system information (for example, first system information/another system information) in cell x.

The SS/PBCH/MIB/system information (for example, the first system information/other system information) may be a signal common to a plurality of service providers.

The UE may transmit a PRACH by using a resource common to a plurality of service providers.

The UE may receive a RAR to the PRACH. The RAR may be a RAR that does not distinguish between service providers (may be a RAR transmitted irrespective of PLMN).

The UE may transmit a message 3 PUSCH, based on a RAR UL grant.

The UE may report to cell x that the UE is to connect to a connection to PLMN #A via the message 3 PUSCH.

The UE may be requested to report information on the PLMN via the message 3 PUSCH in a specific DL signal (for example, system information (first system information/another system information)/RAR).

At least one of when the request for the information on the PLMN (PLMN information) is not included in the specific DL signal and when a PRACH resource/RAR resource is common to a plurality of service providers, the UE may assume/determine that reporting of the PLMN information is requested via the message 3 PUSCH.

When the UE has received a message 4 PDSCH corresponding to the message 3 PUSCH, the UE may determine that the connection to PLMN #A is possible in cell x. In this case, the UE may perform transmission and reception after transmission of an HARQ-ACK of the message 4 PDSCH, to and from cell x (option 5a).

The UE may be notified of whether or not connection to PLMN #A is possible (whether or not the connection is permitted) in cell x, in the message 4 PDSCH corresponding to the message 3 PUSCH (option 5b).

In option 5b, when the UE is permitted to connect to PLMN #A in cell x, the UE may perform transmission and reception after transmission of an HARQ-ACK of the message 4 PDSCH to cell x.

In option 5b, when the UE is not permitted to connect to PLMN #A in cell x, the UE need not perform transmission and reception at or after the reception of the message 4 PDSCH or transmission and reception at or after the transmission of the HARQ-ACK of the message 4 PDSCH to cell x.

Communication based on a configuration related to the transmission and reception at the time of or after the HARQ-ACK of the message 4 PDSCH may be performed based on a configuration common to a plurality of service providers or may be performed based on a configuration of communication related to PLMN #A received via the message 4 PDSCH, until the UE receives a UE-dedicated RRC parameter.

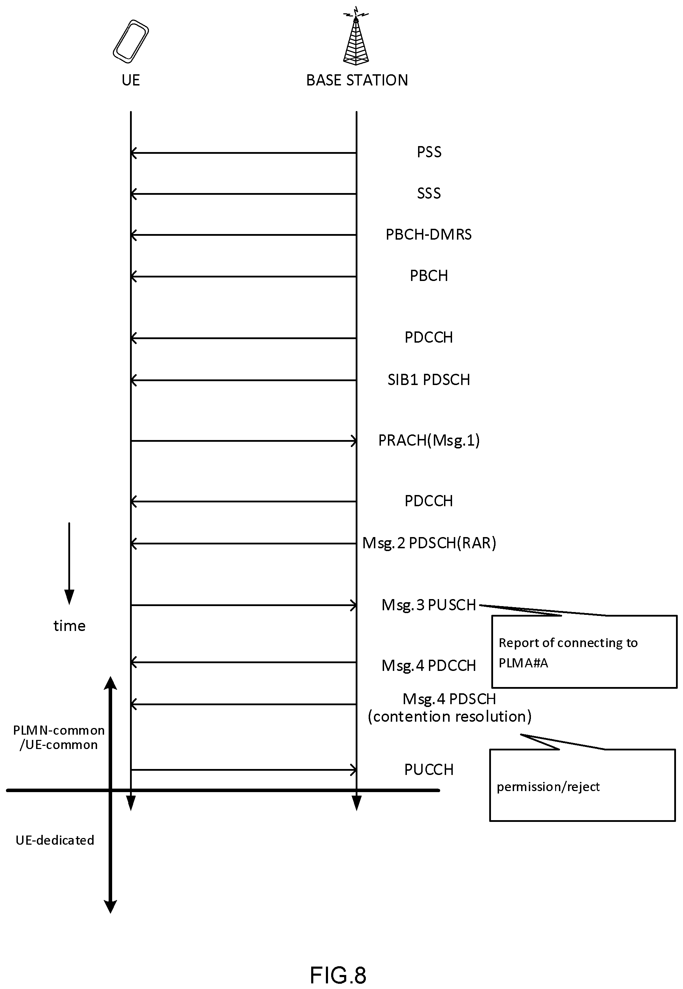

FIG. 8 is a diagram to show an example of an initial access procedure according to the fifth embodiment. In the example shown in FIG. 8, a UE performs transmission and reception by using a PLMN-common/UE-common signal until transmission of an HARQ-ACK/PUCCH in response to a message 4 PDSCH, and using a UE-dedicated (PLMN-dedicated) signal after the transmission of a PUCCH. In the example shown in FIG. 8, the UE reports that the UE is connected to PLMN #A in the message 3 PUSCH, and receives permission/rejection of connection to PLMN #A in cell x in the message 4 PDSCH.

According to the fifth embodiment above, by a signal to be used for initial access being common to service providers, it is possible to appropriately perform initial access even when a shared frequency is used.

### <Sixth Embodiment>

A UE may transmit and receive signals up to transmission of a message 3 PUSCH in initial access, based on a configuration common to a plurality of service providers.

The UE may receive, in a message 4 PDSCH, at least one of information (PLMN set) on a plurality of PLMNs possible to connect to cell x and a configuration related to communication per PLMN.

The UE may be notified that a PLMN set is included in the message 4 PDSCH, by a specific DL signal (for example, system information (first system information/another system information)/RAR).

At least one of when a PLMN set (PLMN information) is not included in the specific DL signal and when a PRACH resource/RAR resource/message 3 PUSCH resource is common to a plurality of service providers, the UE may assume/determine that the PLMN set is included in the message 4 PDSCH.

When the PLMN set received by the UE includes the PLMN (PLMN #A) corresponding to the UE, the UE may be notified of a resource (PUCCH resource) for HARQ-ACK transmission for each PLMN in the message 4 PDSCH. The message 4 PDSCH may be a signal common to a plurality of service providers. The UE may perform transmission and reception of signals after the HARQ-ACK transmission, based on the resource for HARQ -ACK transmission for PLMN #A and the configuration of communication for PLMN #A (option 6a).

In option 6a, an NW may determine the PLMN of the UE, based on the resource for HARQ-ACK transmission resource (actually used).

The UE may be notified of a plurality of (for example, two) resources for HARQ-ACK transmission that are common to a plurality of operators in the message 4 PDSCH. A certain resource (which may be referred to as a resource P) among a plurality of resources for HARQ-ACK transmission may be used when a connection to a specific PLMN included in the PLMN set is performed, and another resource (which may be referred to as a resource Q) among the plurality of resources for HARQ-ACK transmission may be used in a case where a PLMN desired by the UE (corresponding to the UE) is not included in the PLMN set (option 6b).

In option 6b, the UE may transmit an HARQ-ACK in response to the message 4 PDSCH by using the resource P.

In this case, the NW may determine whether or not the UE is to connect to cell x, based on the HARQ-ACK resource used for transmission.

The UE may receive a request for reporting about to which PLMN the UE is to connect, via a DL signal (for example, a PDSCH) after HARQ-ACK transmission.

The UE may transmit a report about to which PLMN the UE is to connect, via a UL signal (for example, a PUSCH) after HARQ-ACK transmission.

Communication based on a configuration related to the transmission and reception at the time of or after the HARQ-ACK of the message 4 PDSCH may be performed based on a configuration common to a plurality of service providers, until the UE receives a UE-dedicated RRC parameter.

When the PLMN set received by the UE does not include the PLMN (PLMN #A) corresponding to the UE, the UE may determine that connection to cell x is not possible. In this case, the UE need not perform transmission and reception of signals at the time of or after transmission of an HARQ-ACK in response to the message 4 PDSCH, in cell x (option 6c).

When the PLMN set received by the UE does not include the PLMN (PLMN #A) corresponding to the UE, the UE may determine that connection to cell x is not possible. In this case, the UE may transmit an HARQ-ACK (for example, a NACK) in response to the message 4 PDSCH by using the above-described resource Q (option 6d).

When the UE determines that connection to cell x is not possible, the UE may perform an initial access procedure for connecting to another cell (for example, non-cell x).

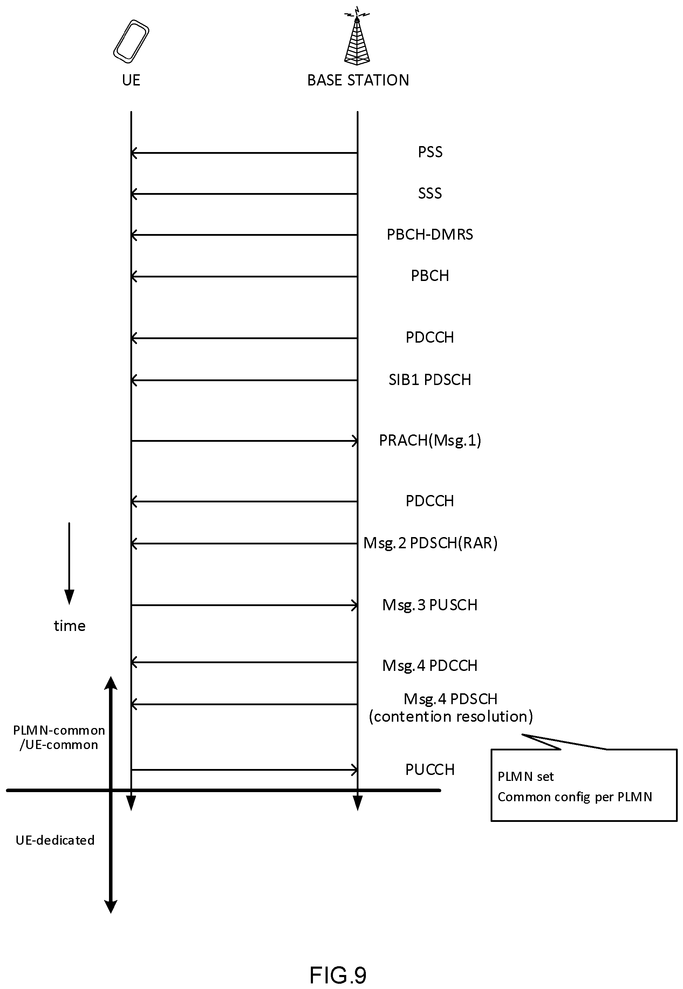

FIG. 9 is a diagram to show an example of an initial access procedure according to the sixth embodiment. In the example shown in FIG. 9, a UE performs transmission and reception by using a PLMN-common/UE-common signal until transmission of an HARQ-ACK/PUCCH in response to a message 4 PDSCH, and using a UE-dedicated (PLMN-dedicated) signal after the transmission of a PUCCH. In the example shown in FIG. 9, a UE receives a PLMN set and a common configuration per PLMN in a message 4 PDCCH.

According to the sixth embodiment above, by a signal to be used for initial access being common to service providers, it is possible to appropriately perform initial access even when a shared frequency is used.

### <Seventh Embodiment>

A UE may transmit and receive signals, based on a configuration common to a plurality of service providers until initial access is completed.

Note that, in the present disclosure, initial access completion, RRC connection establishment completion, message 4 transmission/reception completion, transmission/reception completion of an HARQ-ACK for message 4, transmission/reception completion of information related to RRC setup completion (for example, RRCSetupComplete), and establishment completion of AS (Access Stratum) or NAS (Non-Access Stratum) security may be interchangeably interpreted.

The UE may receive a request for reporting about to which PLMN to connect, via a specific DL signal (for example, PDSCH transmitted after completion of initial access).

The UE may transmit a report about to which PLMN to connect, via a specific UL signal (for example, PUSCH transmitted after completion of initial access).

The report may be reported together with a report of specific UE capability information, for example.

Communication between the NW and the UE may be performed based on a configuration common to a plurality of service providers, until the UE receives a UE-dedicated RRC parameter.

The UE may be notified of whether or not connection to PLMN #A is possible (whether or not the connection is permitted) in cell x, in the specific DL signal.

When the notification indicates that the connection to PLMN #A is possible in cell x, the UE may transmit and receive signals after reception of the notification in cell x.

When the notification indicates that connection to PLMN #A is not possible in cell x, the UE need not transmit and receive signals after the reception of the notification in cell x.

The notification may be transmitted together with, for example, a UE-dedicated RRC parameter.

According to the seventh embodiment above, by all signals to be used for initial access being common to service providers, it is possible to appropriately perform initial access even when a shared frequency is used.

### <Eighth Embodiment>

A UE may assume that the procedure related to initial access is not performed in cell x.

The UE may determine to use cell x as an SCell, based on a specific notification (for example, a notification in non-cell x).

The UE may receive a UE-dedicated RRC parameter for SCell, via non-cell x. The UE may perform communication in cell x, based on the RRC parameter.

The UE may receive a UE-common RRC parameter for SCell via non-cell x. The UE may assume/determine that the RRC parameter is a configuration common to a plurality of service providers or may assume/determine that the RRC parameter is a separate (for example, different) configuration for each service provider. The UE may perform communication in cell x, based on the RRC parameter.

It may be assumed/determined that the UE-common RRC parameter for SCell cannot be received via non-cell x.

According to the eighth embodiment, by defining that initial access is not performed in a cell using a shared frequency, it is possible to perform appropriate cell connection without complicating UE/NW operation.

### <Variations>

In each embodiment of the present disclosure, after reception of a PLMN-dedicated configuration, transmission and reception of signals based on a PLMN-common configuration may be performed. The signal based on the PLMN-common configuration may be limited to a specific signal/channel.

In each embodiment of the present disclosure, a case has been described where there is one boundary between a period in which a PLMN-common signal is transmitted and a period in which a PLMN-dedicated (or UE-dedicated) signal is transmitted, but the number of boundaries is not limited to one. For example, the UE may transmit and receive PLMN-dedicated signals until reception of a PBCH, transmit and receive PLMN-common signals after the reception of the PBCH to transmission of a message 3 PUSCH, and transmit and receive a PLMN-dedicated signal after the transmission of the message 3 PUSCH.

When the UE determines not to be able to connect to cell x, the UE may attempt to connect to another cell x or non-cell x. Another cell x or non-cell x may be a cell having the next highest signal quality (for example, the decoding performance of a synchronization signal) to that of cell x.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may indicate at least one of the following:
- operation is performed in FR3. FR3 may be the entire or a part of the range 7125 to 24250 MHz.
- operation is performed in FRx. FRx may be the entire or a part of a range higher than 71 GHz.

At least one of the above-described embodiments may be applied only to a UE that has reported a specific UE capability or that supports the specific UE capability.

The specific UE capability may indicate at least one of the following:
- supporting of specific processing/operation/control/information for at least one of the above embodiments.
- supporting of connection to cell x.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

The specific UE capability may be defined as a mandatory function without UE capability signaling or may be defined as a mandatory function with UE capability signaling. The specific UE capability may be defined as an optional (selectable) function without UE capability signaling or may be defined as an optional function with UE capability signaling.

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating enabling/disabling of the operation of any of the above-described embodiments.
- RRC parameter for a specific release (for example, Rel. 18/19/20/21). The RRC parameter may have a name obtained by attaching "r18"/"r19"/"r20"/"r21" to the name of an existing RRC parameter.

When the UE does not support at least one of the specific UE capabilities above or is not configured with the specific information, operation of Rel. 15/16/17/18/19 may be applied, for example.

### (Supplementary Notes)

Regarding one embodiment of the present disclosure, the following supplementary notes of the invention will be given.

### {Supplementary Note 1-1}

A terminal including: a receiving section that receives a synchronization signal block common to a plurality of operators, a set of a plurality of identifiers for identifying operators, and information indicating whether or not a cell is a cell in which a plurality of operators share a frequency resource; and a control section that controls operation related to initial access, based on the common synchronization signal, the set of identifiers, and the information.

### {Supplementary Note 1-2}

The terminal according to supplementary note 1-1, wherein the receiving section receives the set of identifiers in a master information block.

### {Supplementary Note 1-3}

The terminal according to supplementary note 1-1 or 1-2, wherein the receiving section receives the set of identifiers in a system information block scheduled by using a master information block.

### {Supplementary Note 1-4}

The terminal according to any one of supplementary notes 1-1 to 1-3, wherein the receiving section receives the set of identifiers in a system information block other than a system information block scheduled by using a master information block.

### {Supplementary Note 2-1}

A terminal including: a receiving section that receives a synchronization signal block common to a plurality of operators, a set of a plurality of identifiers for identifying operators, and information indicating whether or not a cell is a cell in which a plurality of operators share a frequency resource; and a control section that controls operation related to initial access, based on the common synchronization signal, the set of identifiers, and the information, wherein the set of identifiers are received after transmission of a physical random access channel based on the synchronization signal block.

### {Supplementary Note 2-2}

The terminal according to supplementary note 2-1, wherein the receiving section receives the set of identifiers in a random access response to the physical random access channel.

### {Supplementary Note 2-3}

The terminal according to supplementary note 2-1 or 2-2, wherein the control section controls a report on an operator to be connected, by using a message scheduled by a random access response to the physical random access channel.

### {Supplementary Note 2-4}

The terminal according to any one of supplementary notes 2-1 to 2-3, wherein the receiving section receives the set of identifiers by using a response message for a message scheduled by a random access response.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

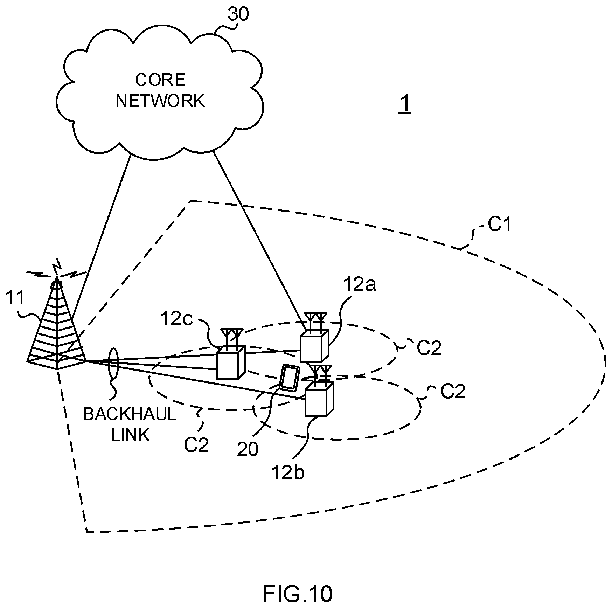

FIG. 10 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

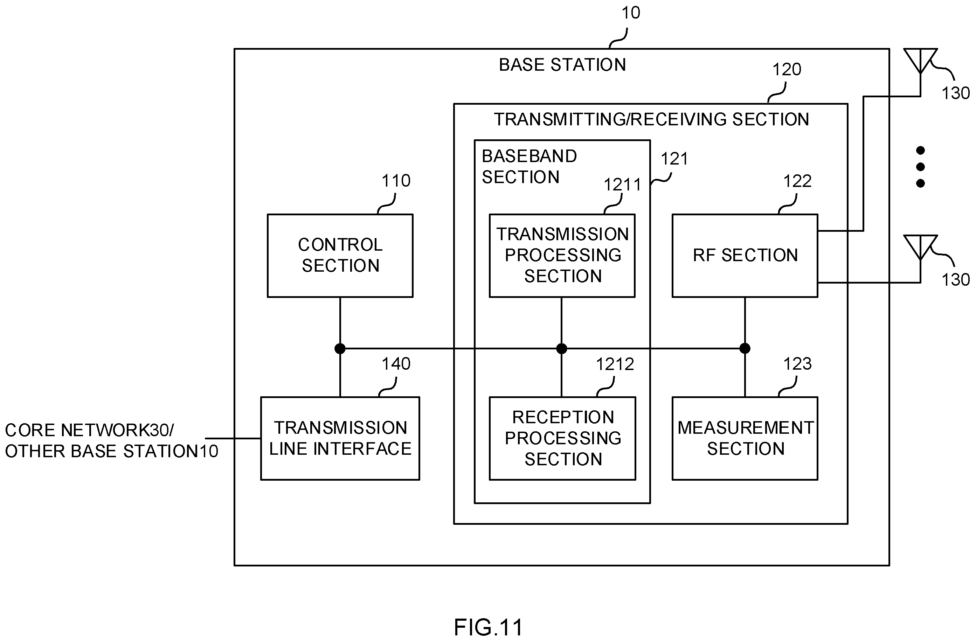

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a synchronization signal block common to a plurality of operators, a set of a plurality of identifiers for identifying operators, and information indicating whether or not a cell is a cell in which a plurality of operators share a frequency resource. The control section 110 may indicate operation related to initial access, by using the common synchronization signal, the set of identifiers, and the information (first to seventh embodiments).

The transmitting/receiving section 120 may transmit a synchronization signal block common to a plurality of operators, a set of a plurality of identifiers for identifying operators, and information indicating whether or not a cell is a cell in which a plurality of operators share a frequency resource. The control section 110 may indicate operation related to initial access, by using the common synchronization signal, the set of identifiers, and the information. The set of identifiers may be transmitted after reception of a physical random access channel based on the synchronization signal block (fourth to seventh embodiments).

### (User Terminal)

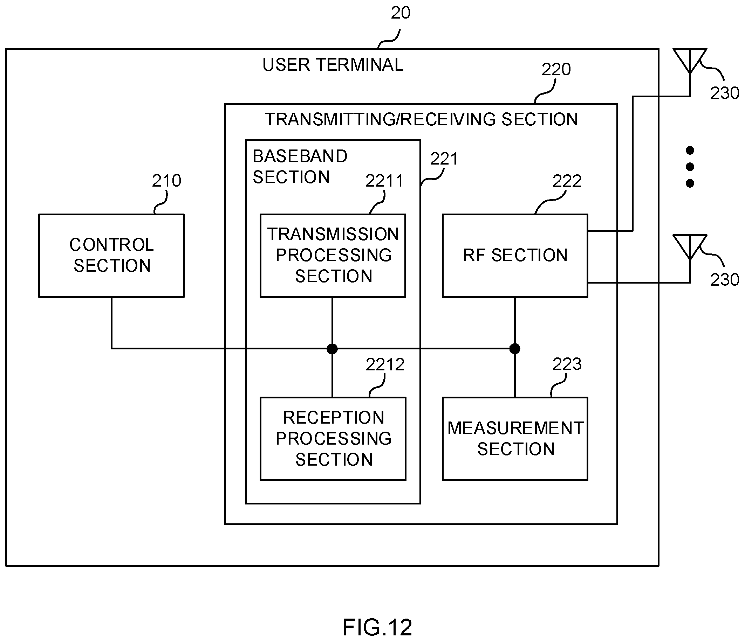

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a synchronization signal block common to a plurality of operators, a set of a plurality of identifiers for identifying operators, and information indicating whether or not a cell is a cell in which a plurality of operators share a frequency resource. The control section 210 may control operation related to initial access, based on the common synchronization signal, the set of identifiers, and the information (first to seventh embodiments).

The transmitting/receiving section 220 may receive the set of identifiers in a master information block (first embodiment).

The transmitting/receiving section 220 may receive the set of identifiers in a system information block scheduled by using a master information block (second embodiment).

The transmitting/receiving section 220 may receive the set of identifiers in a system information block other than a system information block scheduled by using a master information block (third embodiment).

The transmitting/receiving section 220 may receive a synchronization signal block common to a plurality of operators, a set of a plurality of identifiers for identifying operators, and information indicating whether or not a cell is a cell in which a plurality of operators share a frequency resource. The control section 210 may control operation related to initial access, based on the common synchronization signal, the set of identifiers, and the information. The set of identifiers may be received after transmission of a physical random access channel based on the synchronization signal block (fourth to seventh embodiments).

The transmitting/receiving section 220 may receive the set of identifiers in a random access response to the physical random access channel (fourth embodiment).

The control section 210 may control a report on an operator to be connected, by using a message scheduled by a random access response to the physical random access channel (fifth embodiment).

The transmitting/receiving section 220 may receive the set of identifiers by using a response message for a message scheduled by a random access response (sixth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

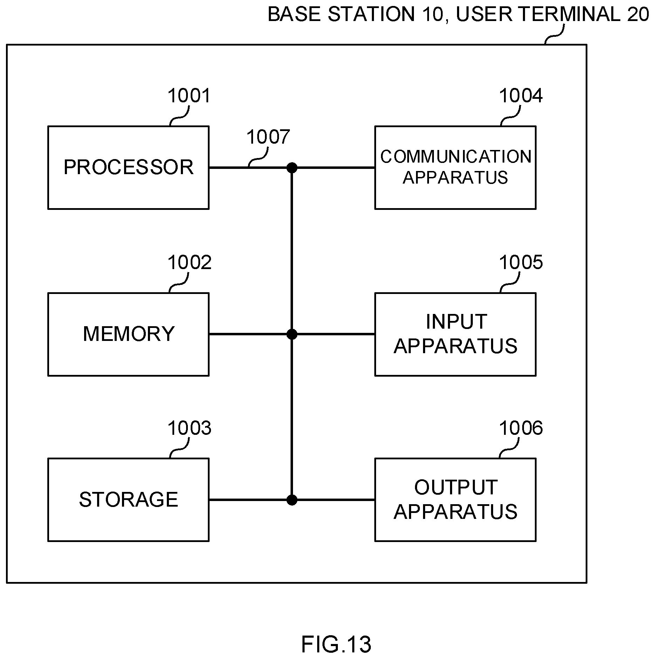

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

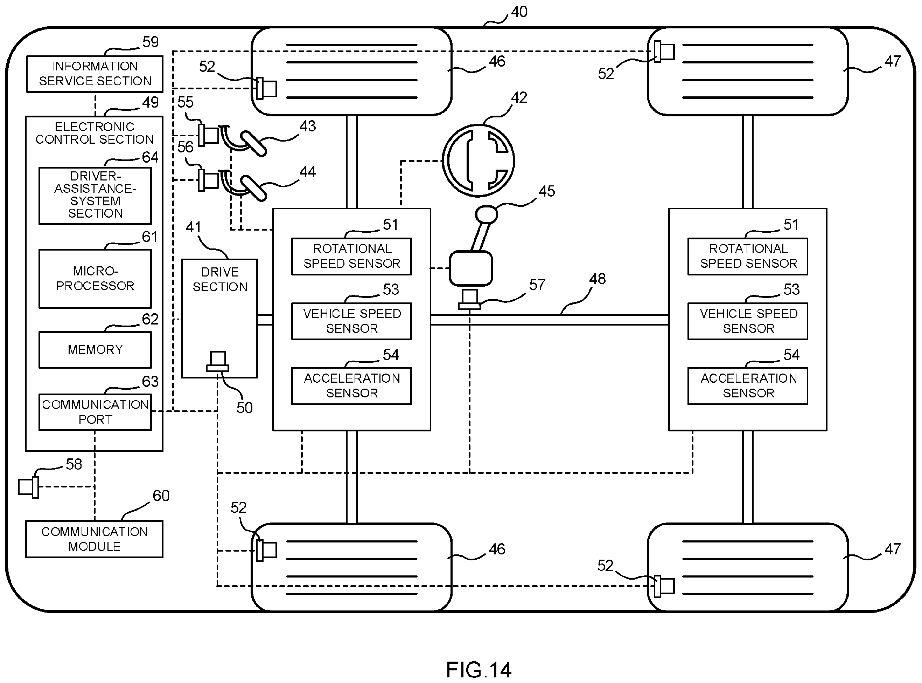

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a synchronization signal block common to a plurality of operators, a set of a plurality of identifiers for identifying operators, and information indicating whether or not a cell is a cell in which a plurality of operators share a frequency resource; and
a control section that controls operation related to initial access, based on the common synchronization signal, the set of identifiers, and the information, wherein
the set of identifiers are received after transmission of a physical random access channel based on the synchronization signal block.

2. The terminal according to claim 1, wherein
the receiving section receives the set of identifiers in a random access response to the physical random access channel.

3. The terminal according to claim 1, wherein
the control section controls a report on an operator to be connected, by using a message scheduled by a random access response to the physical random access channel.

4. The terminal according to claim 1, wherein
the receiving section receives the set of identifiers by using a response message for a message scheduled by a random access response.

5. A radio communication method for a terminal, the radio communication method comprising:
receiving a synchronization signal block common to a plurality of operators, a set of a plurality of identifiers for identifying operators, and information indicating whether or not a cell is a cell in which a plurality of operators share a frequency resource; and
controlling operation related to initial access, based on the common synchronization signal, the set of identifiers, and the information, wherein
the set of identifiers are received after transmission of a physical random access channel based on the synchronization signal block.

6. A base station comprising:
a transmitting section that transmits a synchronization signal block common to a plurality of operators, a set of a plurality of identifiers for identifying operators, and information indicating whether or not a cell is a cell in which a plurality of operators share a frequency resource; and
a control section that indicates operation related to initial access, by using the common synchronization signal, the set of identifiers, and the information, wherein
the set of identifiers are transmitted after reception of a physical random access channel based on the synchronization signal block.
